(19) **Europäisches Patentamt European Patent Office Office européen des brevets**

(11) **EP 1 522 189 B1**

(12) **FASCICULE DE BREVET EUROPEEN**

(45) Date de publication et mention
de la délivrance du brevet:
**20.01.2010 Bulletin 2010/03**

(51) Int Cl.:
***H04N 5/783*** (2006.01)

(21) Numéro de dépôt: **03763909.3**

(22) Date de dépôt: **11.07.2003**

(86) Numéro de dépôt international:
**PCT/EP2003/050305**

(87) Numéro de publication internationale:
**WO 2004/008748 (22.01.2004 Gazette 2004/04)**

(54) **PROCEDE ET DISPOSITIF DE TRANSMISSION DE DONNEES VIDEO POUR LA MISE EN OEUVRE DE MODES SPECIAUX**

**VERFAHREN UND ANLAGE ZUR ÜBERTRAGUNG VON VIDEODATEN ZUR DURCHFÜHRUNG VON TRICKMODI**

**METHOD AND DEVICE FOR VIDEO DATA TRANSMISSION FOR IMPLEMENTING SPECIAL MODES**

(84) Etats contractants désignés:
**DE ES FR GB IT**

(30) Priorité: **17.07.2002 FR 0209038**

(43) Date de publication de la demande:
**13.04.2005 Bulletin 2005/15**

(73) Titulaire: **Thomson Licensing
92100 Boulogne-Billancourt (FR)**

(72) Inventeurs:
• **GUILLEMOT, Jean-Charles
F-35235 THORIGNE-FOUILLARD (FR)**
• **CHAPEL, Claude
F-35200 RENNES (FR)**
• **MARLEC, Olivier
F-35700 RENNES (FR)**

(74) Mandataire: **Ruellan-Lemonnier, Brigitte et al
Thomson multimedia
Patent Department
46 Quai A. Le Gallo
92648 Boulogne Cedex (FR)**

(56) Documents cités:
**EP-A- 0 749 244    EP-A- 1 006 729
FR-A- 2 811 846**

**Description**

L'invention concerne un procédé et dispositif de transmission de données enregistrées, codées selon la norme MPEG 2 ou selon la norme DV, acronymes des expressions anglaises Motion Picture Expert Group et Digital Video. Il s'agit par exemple de données DSS (de l'anglais Digital Satellite System) provenant d'un récepteur satellite, de données DV provenant d'un caméscope numérique..., ces données transitant sur un bus IEEE 1394 pour leur enregistrement ou leur lecture par un décodeur numérique.

L'apparition de nouveaux équipements audiovisuels numériques tels que magnétoscope, caméscope, ordinateur multimédia... rend aujourd'hui indispensable l'utilisation d'une liaison à haute vitesse entre ces équipements. Les réseaux domotiques sont construits autour d'un bus série rapide IEEE 1394 auquel sont abonnés ces équipements. Les données de train audio et vidéo qui exigent d'être transmises en temps réel sont échangées en mode isochrone.

La norme internationale ISO/IEC 13818-1 relative au codage de données audio et vidéo de type MPEG 2, pour ce qui concerne les systèmes, décrit un modèle de synchronisation pour la chaîne complète, c'est à dire au niveau du codage, transmission, décodage et affichage des images de type MPEG. La récupération de l'horloge système, au niveau du décodeur, est effectuée par exemple en verrouillant, par une boucle à verrouillage de phase, les valeurs d'horloge locale sur les valeurs d'horloge de référence transportées par le PCR d'un flux TS entrant. L'instant d'arrivée du champ PCR ne doit pas entraîner une dérive de l'horloge système telle que reproduite dans le décodeur, de plus de 30 ppm, précision imposée par la norme internationale ISO/IEC 13818-1.

Une couche audiovisuelle a été définie pour permettre au récepteur de compenser les variations de temps de transmission introduites par le bus 1394. Elle est spécifiée par la norme IEC 61883. Un en-tête de 12 octets, dans le cas des données MPEG 2, contenant un "marqueur temporel" (time stamp en anglais) est ajouté aux paquets de données, paquets constitués de 188 octets dans le cas de cette norme MPEG 2.

Avant émission sur le bus, en entrée de l'interface 1394, les paquets sont marqués ou estampillés, à partir de l'horloge des circuits 1394 dont la précision, selon la norme, est de 100 ppm. Les paquets audio vidéo sont mémorisés dans la mémoire FIFO de l'interface 1394, chaque paquet reçoit un échantillon temporel, en fait un entête, lors de son arrivée dans la mémoire. Cette mémoire acquiert un certain nombre de paquets pendant la durée de 125 microsecondes, dépendant du débit en entrée. Lorsque le signal de synchronisation de 125 microsecondes ("cycle start") est déclenché, ces paquets sont transmis sur le bus 1394, à la suite les uns des autres en mode « burst ».

Après réception des paquets provenant du bus, en sortie de l'interface 1394, le marqueur est lu et comparé au contenu d'un compteur local pour définir quel sera l'instant de présentation du paquet. Cet échantillon temporel permet de recréer la répartition temporelle que l'on avait en entrée de la FIFO. Le compteur local est synchronisé à chaque début de cycle ("cycle start") sur l'horloge du noeud racine qui génère la période de référence de 125 microsecondes.

Dans le cas d'une liaison directe, c'est à dire d'un simple transfert par le bus 1394, l'écart entre l'instant d'estampillage et l'instant de lecture de l'étiquette est de l'ordre de la centaine de microsecondes. L'écriture ou plus précisément l'étiquetage des données ainsi que la lecture de cette étiquette sont effectuées à partir d'horloges locales différentes mais simultanément synchronisées toutes les 125 microsecondes sur l'horloge maître du noeud racine. L'écriture et la lecture étant quasi instantanées, les effets dus à la gigue ou dérive intrinsèque au mécanisme de synchronisation du bus IEEE1394 et à la précision de son système d'horloge ne se traduisent donc pas par une dérive dans la répartition des paquets dans le temps, en sortie de l'interface 1394. En conséquence, le bus 1394 ne modifie pas le débit et ce marquage temporel selon la norme IEC 61883 résout le problème de perte de la répartition temporelle des paquets MPEG 2 lors de la transmission sur le bus 1394.

Cependant, lorsqu'un stockage de masse est associé aux équipements audiovisuels, lorsque la chaîne de transmission du flux TS est "coupée", par exemple du fait d'un enregistrement des données comprimées de ce flux sur un disque dur pour une lecture ultérieure, ce problème spécifique de dérive subsiste lorsque les données transitent par le bus 1394.

L'utilisation de l'étiquetage relatif à la couche 1883, pour l'enregistrement sur le support, ne permet pas de résoudre le problème du fait de la précision de l'horloge de synchronisation 1394, qui est de l'ordre de 100 ppm. L'instant d'estampillage des données est différent de l'instant de lecture de ces données du disque dur. Il y a dérive sur le débit de sortie de l'interface 1394 du fait de la nouvelle répartition temporelle des paquets dans le temps liée à l'évolution de la fréquence horloge.

On peut également remarquer que le noeud racine (root node dans la norme) lors de l'enregistrement peut être différent de celui lors de la lecture. En conséquence, la synchronisation de l'horloge lors de l'étiquetage peut être faite sur une horloge maître différente de celle lors de la lecture de l'étiquette.

Cette dérive sur le débit et donc sur les instants d'arrivée des PCR sur lesquels se synchronise l'horloge locale 27 Mhz entraîne une dérive de cette horloge en fréquence. En conséquence, à plus ou moins long terme, un assèchement ou un débordement du buffer du décodeur MPEG apparaît se traduisant par un défaut de visualisation des images sur le récepteur, par exemple un gel d'image apparaît de manière récurrente.

Un décalage trop important de cette horloge synchronisée peut également détériorer la qualité des signaux chrominance extraits de la sous-porteuse.

Modifier la précision de 100 ppm d'un équipement ne permettrait pas de résoudre le problème car n'importe quel équipement peut être déclaré noeud racine lors de l'écriture puis lors de la lecture des données du disque dur.

Un mode de fonctionnement connu appelé "pull" dans lequel le débit de transfert de données du disque dur vers le décodeur peut être "commandé" par le décodeur, par exemple en fonction du taux de remplissage du tampon du décodeur permet d'éviter tout assèchement ou débordement de ce tampon. Dans ce mode, les problèmes de précision d'horloge sont moins cruciaux, une dérive trop importante de l'horloge du décodeur, du fait d'une dérive dans le débit, étant corrigée par une régulation du débit du flux en lecture, par le décodeur, en fonction du niveau de remplissage du buffer du décodeur. Ce mode de fonctionnement n'est cependant pas possible dans le cas d'un enregistrement de flux TS qui ne permet pas les accès directs mémoire (DMA) par le décodeur. Quant à l'enregistrement au niveau des paquets PES, il ne permet pas le transfert de ces données sur le bus 1394.

Ainsi, si les données comprimées ne sont pas transmises directement à un décodeur mais sont enregistrées sur un support d'enregistrement, par exemple un disque dur, pour être, par la suite, lues, par l'intermédiaire d'un bus 1394, des problèmes de dérive subsistent entraînant de manière récurrente et à plus ou moins brève échéance un défaut d'affichage des images.

La demande de brevet déposée en France le 17 juillet 2000 et publiée sous le numéro 2 811 846 permet de résoudre ce problème. Le procédé de lecture sur un support d'enregistrement, de données audio et vidéo codées sous forme de paquets selon la norme MPEG, pour leur transmission à un décodeur par l'intermédiaire d'un bus 1394 qui comprend une étape de lecture d'étiquettes enregistrées avec les paquets, ces étiquettes définissant les instants d'arrivée des paquets de données à enregistrer, à partir d'une horloge d'étiquetage, et une étape de comparaison des étiquettes à des valeurs comptées à partir d'une horloge de transfert pour définir les instants de transfert sur le bus des données lues du support d'enregistrement.

Les fréquences de fonctionnement des dites horloges d'étiquetage et de transfert doivent répondre à certaines caractéristiques , en particulier en ce qui concerne l'écart maximum entre ces fréquences ou la dérive s'il s'agit d'une même horloge.

Grâce à l'estampillage des paquets mémorisés dans le support d'enregistrement à partir d'une horloge spécifique, les risques d'assèchement ou de débordement du buffer du décodeur sont réduits au minimum. Il y a ainsi parfaite compatibilité pour la mémorisation et transfert de signaux de type DV ou MPEG à travers un bus 1394.

Un problème particulier apparaît lors de l'utilisation de modes spéciaux, appelés aussi « trick-modes » dans la norme MPEG. L'estampillage des paquets et la création de fichiers contenant les étiquettes nécessite de modifier ces dernières lors de l'utilisation de ces trick-modes. En effet, si cette utilisation ne pose pas de problème en local, c'est à dire lorsque le décodeur est maître, il n'en est pas de même lors de l'exploitation d'un serveur qui renvoie, en mode normal, les données au même débit qu'à l'enregistrement. Lors de l'exploitation, par exemple, du mode accéléré le serveur doit augmenter le débit lors de la diffusion. Disposant du seul fichier sur disque contenant les étiquettes, une solution consiste à modifier ces étiquettes enregistrées dans les fichiers. L'application effectue cette modification en temps réel. Cette solution est très coûteuse en bande passante et en ressources de l'unité centrale de traitement. Une modification des étiquettes hors temps réel, avec réécriture des étiquettes modifiées sur le support, n'est pas envisageable car trop coûteuse en temps de traitement et ne permet pas de répondre en quasi temps réel aux commandes de modes spéciaux, par définition imprévisibles.

Une autre solution consiste à avoir une capacité de stockage importante en local, par exemple au niveau du décodeur, pour réaliser des fonctions simples des modes spéciaux mais cette solution est coûteuse en mémoire vidéo.

L'invention ici proposée, qui est un perfectionnement du procédé et dispositif objets de la demande de brevet publiée ci-dessus référencée, permet de résoudre les problèmes précités.

A cet effet, l'invention a pour objet un procédé de transmission, sur un bus, de données vidéo codées enregistrées sur un support d'enregistrement, les données enregistrées étant des paquets de données et des étiquettes affectées aux paquets conformément à la revendication 1.

L'invention concerne également un dispositif de transmission de données pour la mise en oeuvre du procédé précédent conformément à la revendication 9.

L'invention concerne également un serveur utilisant un tel dispositif de transmission.

L'idée est, non pas que l'application modifie les étiquettes enregistrées sur le disque dur, en temps réel, mais qu'elle calcule un offset pour l'appliquer aux étiquettes lues qui sont comparées à des valeurs comptées pour décider de l'instant de transmission des paquets. La solution consiste donc à mettre à contribution le serveur, les offsets étant calculés en fonction des paramètres du mode spécial sélectionné transmis par le décodeur.

L'invention fournit un moyen simple de fonctionnement des modes spéciaux tels qu'accéléré, ralenti de l'image... sans nécessiter de ressources importantes en stockage ou traitement CPU. Elle permet de rejouer à des vitesses variables des flux préenregistrés, tout en conservant un débit donné imposé par les étiquettes enregistrées sur le support d'enregistrement avec les paquets de données et garantes du débit de relecture. Les modes spéciaux peuvent être mis en oeuvre au travers d'un réseau domestique, à partir d'un fichier source unique, sans fichier d'index.

D'autres particularités et avantages de l'invention apparaîtront clairement dans la description suivante donnée à titre d'exemple non limitatif et faite en regard des figures annexées qui représentent

- la figure 1, un récepteur relié à un dispositif d'enregistrement,
- la figure 2, un circuit d'interface lecture.

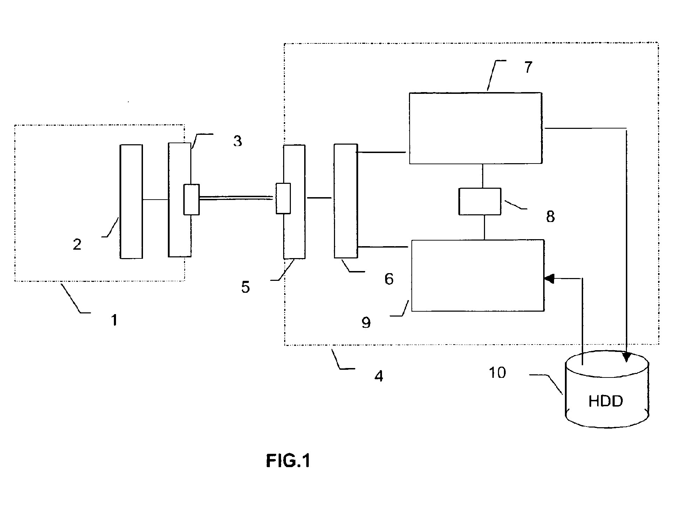

Un exemple de dispositif auquel s'applique l'invention, décrit dans la demande publiée n° 2 811 846, est rappelé ci-dessous. Il est représenté à la figure 1. Il s'agit d'un dispositif d'enregistrement sur un disque dur de données comprimées, relié à un récepteur satellite, et de lecture de ces données, à travers un bus 1394.

Un récepteur 1 équipé d'un circuit interface 1394 reçoit un train de données audio vidéo comprimées selon la norme MPEG 2 provenant d'une transmission par satellite, appelé train de transport TS dans la norme (acronyme de l'anglais Transport Stream). Le signal reçu par le récepteur est, entre autres, démodulé pour fournir un signal en bande de base. Ce flux de transport comporte plusieurs programmes. Il peut être transmis tel quel ou bien après filtrage ne sélectionnant que les paquets correspondant à un programme choisi.

Un circuit interface 1394 intégré au récepteur permet de transmettre ce flux de données sur la liaison 1394. Ce circuit est constitué, selon les appellations dans la norme, d'une couche "contrôle de liaison" (LINK) 2 et d'une couche interface physique (PHY) 3. Il permet, entre autres, de réaliser l'étiquetage des paquets selon la norme IEC 61883. Les données sont transmises par l'intermédiaire d'un port 1394. Le dispositif d'enregistrement 4 comporte un disque dur 10 et un circuit d'interface du disque dur 4 relié au bus 1394 et au disque dur.

Ce circuit d'interface 4 comprend un circuit PHI 5, un circuit LINK 6, un circuit d'interface écriture 7, un circuit d'interface lecture 9 et un circuit d'horloge 8.

Les données arrivent, par l'intermédiaire d'un port 1394, sur un circuit PHY 5 et un circuit LINK 6 conformes à la norme 1394. Elles sont transmises sur le port audio vidéo de sortie du circuit LINK aux instants correspondant à l'étiquetage des paquets. Le port audio vidéo est relié à l'entrée d'un circuit d'interface écriture 7 qui estampille les données. Le circuit d'interface disque dur 4 est relié à un disque dur 10. Il transmet les données estampillées au disque dur pour leur enregistrement.

Le disque dur 10 est relié à une entrée du circuit d'interface 4 pour la lecture des données. Un circuit d'interface lecture 9 vient lire les données sur cette entrée pour les transmettre au port audio vidéo d'entrée du circuit PHI 6. Ces données sont ensuite envoyées au bus 1394 via le circuit PHY 5 et le port 1394.

Une horloge 8 alimente chacun des circuits d'interface 7 et 9.

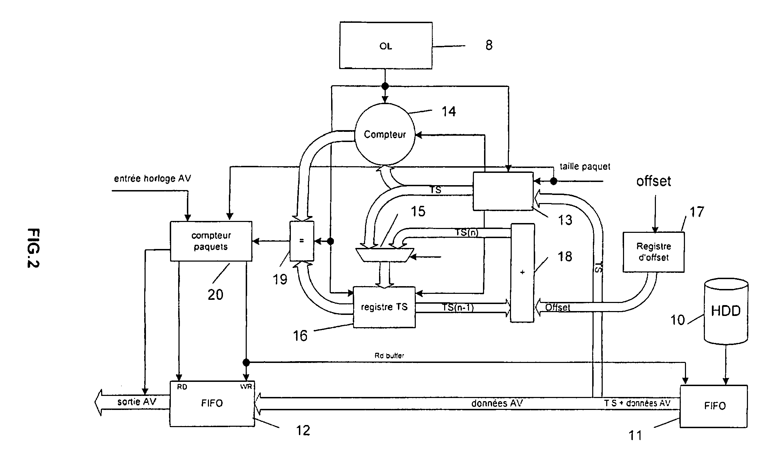

L'invention objet de la présente demande de brevet concerne plus particulièrement le circuit d'interface 9. La figure 2 représente un tel circuit qui reprend des éléments déjà décrits dans la demande de brevet publiée ci-dessus référencée et dont le fonctionnement est décrit ci après.

Le disque dur 10 est relié à une entrée du circuit d'interface lecture 9 pour fournir les données enregistrées. Ces données en entrée de ce circuit transitent par une mémoire tampon de lecture 11 pour être transmises vers une mémoire paquets 12 et un circuit d'extraction d'étiquette 13. Les données audio vidéo sont enregistrées dans la mémoire paquets 12 alors que les données d'étiquetage sont extraites puis mémorisées par le circuit d'extraction d'étiquette 13. Ces données d'étiquetage sont celles ajoutées aux données audio vidéo par le circuit 7, pour chaque paquet. L'information relative à la longueur d'un paquet est transmise au circuit d'extraction 13, l'étiquette à extraire étant reçue à la cadence paquets.

Le circuit d'extraction 13 transmet les étiquettes sur l'entrée d'un compteur de restitution 14 et sur une première entrée d'un commutateur 15, en synchronisation avec l'horloge 8 reçue par le circuit d'interface. Il transmet également un signal de commande de chargement au compteur de restitution à l'ouverture du fichier, le compteur chargeant alors la première étiquette temporelle lue lors de l'ouverture du fichier pour s'initialiser.

La sortie du commutateur 15 est reliée à un registre de mémorisation de l'étiquette temporelle 16. Le circuit d'extraction 13 transmet un signal de prise en compte des données au registre 16, lors de l'envoi d'une étiquette temporelle extraite. L'information en sortie du commutateur est alors chargée par le registre en synchronisation avec le signal d'horloge 8 également reçu par ce registre.

Un registre d'offset d'étiquette 17 reçoit une information d'offset calculée par l'unité de traitement centrale (CPU) non représentée sur la figure. Ce calcul est effectué en fonction des commandes reçues du décodeur. Les données d'offset sont transmises sur l'entrée d'un circuit additionneur 18. Une deuxième entrée du circuit additionneur reçoit les informations provenant du registre 16. La sortie de l'additionneur est transmise sur la deuxième entrée du commutateur 15.

L'entrée horloge du compteur 14 reçoit les signaux de l'horloge 8. La sortie du compteur 14 est transmise à un comparateur 19 qui reçoit sur une deuxième entrée les données en sortie du registre 16, soit l'étiquette temporelle du paquet qui est en cours de mémorisation dans la mémoire paquets 12, soit l'étiquette du paquet précédent à laquelle a été ajouté l'offset. A l'égalité, et synchronisé sur le signal d'horloge 8 reçu par le circuit, un signal de commande de lecture est transmis par ce comparateur 19 à un compteur paquets 20. A la réception de ce signal, le compteur 20 déclenche la lecture, de la mémoire paquet 12, d'un nombre d'octets correspondant à un paquet. Ce compteur paquet reçoit l'information relative à la longueur d'un paquet. Pendant la lecture des données de la mémoire paquet 12, le compteur 20 actionne la lecture d'un nouveau paquet de la mémoire tampon de lecture 11 et l'écriture de ce paquet dans la mémoire paquet 12. L'entrée horloge du compteur paquet est alimentée par le signal d'horloge audio vidéo provenant de l'interface LINK 6 afin de synchroniser la transmission des données. Les données audio vidéo provenant de la mémoire paquet 12 ainsi que les signaux d'horloge de début de paquet et données valides correspondants provenant du compteur de paquet 20 sont fournies en sortie du circuit d'interface 9.

Ainsi, le compteur de restitution 14 est initialisé avec l'étiquette du premier paquet lu dans le fichier du disque dur. Dans la phase transitoire, le premier paquet est mémorisé dans la mémoire paquet et lu immédiatement, donc transmis immédiatement vers le port d'entrée audio vidéo du circuit LINK 6. Après la mémorisation suivie de la transmission immédiate du premier paquet, l'étiquette du deuxième paquet est extraite et sa valeur ou celle du paquet précédent à laquelle a été ajoutée une valeur d'offset est chargée dans le registre 16 pendant que le deuxième paquet est mémorisé dans la mémoire paquet. Le compteur 14 tourne à la fréquence de l'horloge de précision 8 et lorsque la valeur de comptage est égale à la valeur mémorisée dans le registre 16, le comparateur 19 transmet un signal de déclenchement du compteur paquet 20 pour la lecture et la transmission au port d'entrée audio vidéo du circuit LINK 6 du nombre d'octets correspondant à un paquet. Et ainsi de suite à chaque lecture d'un nouveau paquet.

Les données relatives aux commandes des modes spéciaux sont transmises par l'intermédiaire du bus IEEE1394, en mode asynchrone. Cette transmission exploite des protocoles d'interopérabilité propriétaires ou bien standardisés tels que par exemple HAVi (Home Audio Video interface) ou UPnP (Universal Plug and Play).

Lorsqu'une commande d'un mode spécial est reçue par l'unité de traitement (CPU) du serveur, cette dernière calcule l'offset en fonction de l'écart relatif entre deux paquets successifs, moyenne par exemple sur une dizaine de secondes, et des paramètres du mode sélectionné. Le moyennage, qui peut être réalisé en permanence, permet d'obtenir une valeur représentative du débit moyen du flux, la répartition temporelle entre deux paquets pouvant être très différente d'un paquet à l'autre. Cet offset est mémorisé dans le registre d'offset 17 pour être transmis à l'additionneur 18. Celui-ci ajoute cet offset à l'étiquette TS(n-1) du paquet précédemment transmis et provenant du registre TS 16 pour fournir une nouvelle valeur d'étiquette modifiée TS(n) pour le paquet suivant à transmettre. Cette valeur est transmise au commutateur 15 qui la fournit au registre TS 16 pour y être chargée, la commande du commutateur provenant du CPU validant cette entrée, commande répondant à la requête de mode spécial transmise par le décodeur. Lorsque la sortie du compteur 14 correspond à cette étiquette modifiée, le comparateur transmet l'information au compteur paquets 20 qui déclenche le transfert du paquet sur le bus.

Ainsi, si la commande de fonctionnement en mode spécial est reçue par exemple lors de l'envoi ou après l'envoi du paquet (n-1) sur le réseau, correspondant à l'étiquette TS(n-1) lue sur le support d'enregistrement, l'envoi du paquet suivant (n) sera déclenché par l'étiquette suivante TS(n) calculée par ajout de l'offset à l'étiquette TS(n-1).

On a :

$$TS(n-1)=TS(fichier)$$

$$TS(n)= TS(fichier)+offset$$

$$TS(n+1)=TS(fichier)+2xoffset$$

$$TS(n+2)=TS(fichier)+3xoffset$$

et ainsi de suite jusqu'à ce que la commutation sur le mode de lecture normal soit à nouveau effective. TS(fichier) correspond à l'étiquette associée au paquet (n-1) mémorisée sur le support d'enregistrement.

Le calcul de l'offset peut être effectué hors temps réel, c'est à dire avant la transmission des paquets, à partir des valeurs d'étiquettes enregistrées. Le moyennage est effectué sur un nombre d'étiquettes correspondant à une durée de transmission prédéterminée. Ce nombre correspond par exemple au nombre d'étiquettes successives au-delà duquel la variation de la valeur moyenne devient négligeable, et ce, pour un nombre d'échantillons donné, un échantillon correspondant à un ensemble d'étiquettes successives parmi les étiquettes enregistrées. Ou bien, ce nombre peut être choisi de manière à correspondre à une durée de l'ordre d'une dizaines de secondes ou plus, la valeur étant d'autant plus représentative que le nombre d'étiquettes prises en compte est important.

Le calcul de l'offset par l'unité centrale de traitement peut s'effectuer en tenant compte de la dernière valeur moyenne calculée concernant l'écart entre deux paquets, pour un fonctionnement en mode normal, en considérant cette dernière rafraîchie en permanence, de la vitesse de fonctionnement en mode normal et de la nouvelle vitesse demandée. Il est également possible de prendre en compte la dernière valeur moyenne calculée quelque soit le mode de fonctionnement et la dernière vitesse de fonctionnement mise en oeuvre, à partir de laquelle a été calculée cette valeur moyenne.

L'application calcule, à partir des paramètres du mode spécial requis et de cette valeur moyenne, l'offset à appliquer aux valeurs d'étiquettes. La valeur moyenne de l'écart entre les valeurs d'étiquettes relatives à deux paquets successifs est calculée. Soit a cette valeur. Un fonctionnement en mode accéléré, par exemple à vitesse n fois supérieure à la vitesse de défilement normale des images correspond alors à un offset égal à n / a. Les paquets sont ainsi transférés dans la mémoire paquets 12 et lus sur le réseau à une vitesse n fois supérieure. De même, un fonctionnement en ralenti, par exemple d'un coefficient p, correspond à un offset de a x p, le compteur paquets 20 déclenchant alors l'écriture des paquets dans la mémoire et le transfert des paquets sur le réseau à une vitesse p fois moindre que la vitesse normale.

Le buffer ou mémoire tampon du décodeur mémorise les paquets reçus. L'unité de calcul du décodeur extrait du buffer les images mémorisées, à la fréquence d'affichage. Si le mode spécial est le mode accéléré, une certaine proportion d'images mémorisées est abandonnée et le décodeur ne décode que les images à visualiser.

Bien sur, l'utilisateur peut à tout moment sortir du mode spécial ou modifier les paramètres, par exemple pour reprendre le cours normal d'un film, la requête transmise au décodeur étant immédiatement envoyée vers le serveur sur le bus 1394, en mode asynchrone, pour qu'il reprenne la diffusion du flux à la vitesse initiale.

L'invention décrite concerne la norme MPEG et la transmission sur bus 1394 . Mais l'invention peut s'appliquer à tout procédé de lecture basé sur la comparaison d'étiquettes enregistrées avec des données vidéo sur support d'enregistrement pour définir l'instant de transmission de données sur le bus.

**Revendications**

1. Procédé de transmission, sur un bus, de données vidéo codées enregistrées sur un support d'enregistrement (10), les données enregistrées étant des paquets de données et des étiquettes affectées aux paquets définissant les instants d'arrivée des dits paquets au dit support d'enregistrement (10), comprenant une étape de comparaison d'une étiquette à une valeur comptée (9) à partir d'une horloge de transfert (8) pour définir l'instant de transfert sur le bus d'un paquet lu du support d'enregistrement (10), **caractérisé en ce que,** pour la mise en oeuvre d'un mode spécial ou « trick-mode », il comporte également les étapes suivantes préalables à la dite étape de comparaison :

   - calcul de l'écart entre deux paquets consécutifs en fonction de valeurs d'étiquettes enregistrées,
   - calcul d'une valeur d'offset (17) en fonction de cet écart et de paramètres reçus sur le bus définissant le mode spécial,
   - addition (18) de cet offset à la valeur d'étiquette du paquet précédemment transmis pour obtenir une nouvelle valeur d'étiquette définissant l'instant de transfert sur le bus du paquet suivant à transmettre.

2. Procédé selon la revendication 1, **caractérisé en ce que** le calcul de l'écart est moyenné sur une succession de paquets.

3. Procédé selon la revendication 2, **caractérisé en ce que** le calcul de l'écart moyen est effectué hors temps réel, à partir des étiquettes enregistrées prises sur une période prédéterminée.

4. Procédé selon la revendication 1, **caractérisé en ce que** les données enregistrées sont des données audio et vidéo codées selon la norme MPEG.

5. Procédé selon la revendication 2, **caractérisé en ce que** les données enregistrées correspondent au flux TS (Transport Stream).

6. Procédé selon la revendication 1, **caractérisé en ce que** le bus est un bus IEEE 1394,

7. Procédé selon la revendication 6, **caractérisé en ce que** les paramètres du mode spécial proviennent d'un décodeur relié au bus IEEE1394.

8. Procédé selon la revendication 1, **caractérisé en ce que** les modes spéciaux sont les modes ralenti et accéléré, en défilement avant ou arrière des images, les paramètres définissant la vitesse et le sens de défilement.

9. Dispositif pour la mise en oeuvre du procédé selon la revendication 1 de transmission, sur un bus, de données vidéo codées enregistrées sur un support d'enregistrement (10), les données enregistrées étant des paquets de données et des étiquettes affectées aux paquets, définissant les instants d'arrivée des dits paquets au dit support d'enregistrement (10), **caractérisé en ce qu'**il comporte :

   - un compteur (14) pour fournir des informations de comptage,
   - un comparateur (19) qui compare les informations de comptage à une étiquette pour déclencher la transmission du paquet correspondant à l'étiquette, sur le bus
   - un circuit de calcul (CPU) recevant les paramètres du mode spécial et les valeurs d'étiquette de paquets précédant transmis pour calculer une valeur d'offset en fonction de ces paramètres et de l'écart entre les valeurs d'étiquettes de deux paquets successifs,
   - un additionneur (18) pour additionner la valeur d'étiquette correspondant à l'instant de transmission d'un paquet (n-1) à une valeur d'offset pour définir une nouvelle valeur d'étiquette transmise au comparateur et correspondant à la transmission d'un paquet suivant n.

10. Dispositif selon la revendication 9, **caractérisé en ce que** le circuit de calcul effectue le calcul d'une valeur moyenne des écarts entre les valeurs d'étiquettes de deux paquets successifs.

11. Serveur, **caractérisé en ce qu'**il comporte un dispositif de transmission selon la revendication 9.


**Claims**

1. Method of transmitting, over a bus, encoded video data stored on a storage medium (10), the stored data being data packets and tags assigned to the packets defining the arrival time of said packets at said storage medium (10), comprising a comparison step for comparing a tag with a value counted (9) from a transfer clock (8) to define the time of transfer over the bus of a packet read from the storage medium (10), **characterized in that**, for the implementation of a trick mode, it also comprises the following steps, previously to said comparison step:

   - computation of the difference between two consecutive packets according to stored tag values,
   - computation of an offset value (17) according to this difference and parameters received over the bus defining the trick mode,
   - addition (18) of this offset to the tag value of the previously transmitted packet to obtain a new tag value defining the time of transfer over the bus of the next packet to be transmitted.

2. Method according to Claim 1, **characterized in that** the computation of the difference is averaged over a succession of packets.

3. Method according to Claim 2, **characterized in that** the computation of the average difference is performed not in real time, based on stored tags taken over a predefined period.

4. Method according to Claim 1, **characterized in that** the stored data is audio and video data encoded according to the MPEG standard.

5. Method according to Claim 2, **characterized in that** the stored data corresponds to the transport stream TS.

6. Method according to Claim 1, **characterized in that** the bus is an IEEE 1394 bus.

7. Method according to Claim 6, **characterized in that** the parameters of the trick mode originate from a decoder linked to the IEEE 1394 bus.

8. Method according to Claim 1, **characterized in that** the trick modes are the slow-motion and fast motion modes, forward or backward, the parameters defining the speed and the direction.

9. Device for transmitting, over a bus, encoded video date stored on a storage medium (10), the stored data being data packets and tags assigned to the packets defining the arrival time of said packets at said storage medium (10), for implementing the method according to Claim 1, **characterized in that** it comprises:

   - a counter (14) for supplying count information,
   - a comparator (19) which compares the count information with a tag to trigger the transmission of the packet corresponding to the tag, over the bus,
   - a computation circuit (CPU) receiving the parameters of the trick mode and the tag values of preceding packets transmitted to compute an offset value according to these parameters and the difference between the tag values of two successive packets,
   - an adder (18) for adding the tag value corresponding to the time of transmission of a packet (n-1) to an offset value to define a new tag value transmitted to the comparator and corresponding to the transmission of a subsequent packet n.

10. Device according to Claim 9, **characterized in that** the computation circuit computes an average value of the differences between the tag values of two successive packets.

11. Server, **characterized in that** it comprises a transmission device according to Claim 9.


**Patentansprüche**

1. Verfahren für die Übertragung von codierten, auf einem Speichermedium (10) gespeicherten Videodaten über einen Bus, wobei es sich bei den gespeicherten Daten um Datenpakete handelt und den Paketen zugeordnete Labels die Zeitpunkte bestimmen, zu denen die Pakete am Speichermedium (10) ankommen, mit einem Schritt des Vergleichens eines Labels mit einem gezählten Wert (9) aufgrund eines Transfertakts (8), um den Zeitpunkt zu bestimmen, zu dem ein von dem Speichermedium (10) gelesenes Paket über den Bus transferiert wird, **dadurch gekennzeichnet, dass** es für den Einsatz eines Spezialmodus bzw. "Trick-Modus" ebenfalls die folgenden, dem Schritt des Vergleichens vorangehenden Schritte umfasst:

   - Berechnen des Abstands zwischen zwei aufeinander folgenden Paketen in Abhängigkeit von gespeicherten Labelwerten,
- Berechnen eines Offset-Werts (17) in Abhängigkeit von diesem Abstand und von Parametern, die über den Bus empfangen werden und die den Spezialmodus definieren,
- Hinzurechnen (18) dieses Offsets zu dem Labelwert des zuvor übertragenen Pakets, um einen neuen Labelwert zu erhalten, der den Zeitpunkt bestimmt, zu dem das folgende zu übertragende Paket über den Bus transferiert wird.

**2.** Verfahren nach Anspruch 1, **dadurch gekennzeichnet, dass** die Berechnung des Abstands über eine Aufeinanderfolge von Paketen gemittelt wird.

**3.** Verfahren nach Anspruch 2, **dadurch gekennzeichnet, dass** die Berechnung des Mittelabstandes in Nichtechtzeit aufgrund der gespeicherten Labels einer vorbestimmten Zeitspanne erfolgt.

**4.** Verfahren nach Anspruch 1, **dadurch gekennzeichnet, dass** es sich bei den gespeicherten Daten um Audio- und Videodaten handelt, die nach dem MPEG-Standard codiert sind.

**5.** Verfahren nach Anspruch 2, **dadurch gekennzeichnet, dass** die gespeicherten Daten dem TS-Strom (Transport Stream) entsprechen.

**6.** Verfahren nach Anspruch 1, **dadurch gekennzeichnet, dass** es sich bei dem Bus um einen IEEE-1394-Bus handelt.

**7.** Verfahren nach Anspruch 6, **dadurch gekennzeichnet, dass** die Parameter des Spezialmodus aus einem mit dem IEEE-1394-Bus verbundenen Decoder stammen.

**8.** Verfahren nach Anspruch 1, **dadurch gekennzeichnet, dass** es sich bei den Spezialmodi um den Zeitlupenmodus und den Zeitraffermodus mit dem Bild-Vorspul- oder Bild-Rückspulmodus handelt, wobei die Parameter die Laufgeschwindigkeit und -richtung bestimmen.

**9.** Vorrichtung für die Umsetzung des Verfahrens nach Anspruch 1 für die Übertragung von codierten, auf einem Speichermedium (10) gespeicherten Videodaten über einen Bus, wobei es sich bei den gespeicherten Daten um Datenpakete handelt und den Paketen zugeordnete Labels die Zeitpunkte bestimmen, zu denen die Pakete am Speichermedium (10) ankommen, **dadurch gekennzeichnet, dass** sie Folgendes umfasst:

- einen Zähler (14) zur Bereitstellung von Zählinformationen,

- einen Komparator (19), der die Zählinformationen mit einem Label vergleicht, um die Übertragung des dem Label entsprechenden Pakets über den Bus auszulösen,
- eine Berechnungsschaltung (CPU), welche die Parameter des Spezialmodus und die Labelwerte von vorherigen übertragenen Paketen empfängt, um einen Offset-Wert in Abhängigkeit dieser Parameter und des Abstands zwischen den Labelwerten zweier aufeinander folgender Pakete zu berechnen,
- einen Addierer (18), um den dem Zeitpunkt der Übertragung eines Pakets (n-1) entsprechenden Labelwert zu einem Offset-Wert zu addieren, um einen neuen Labelwert zu bestimmen, der an den Komparator übertragen wird und dem Zeitpunkt der Übertragung eines nachfolgenden Pakets n entspricht.

**10.** Vorrichtung nach Anspruch 9, **dadurch gekennzeichnet, dass** die Berechnungsschaltung einen Mittelwert der Abstände zwischen den Labelwerten zweier aufeinander folgender Pakete berechnet.

**11.** Server, **dadurch gekennzeichnet, dass** er eine Übertragungsvorrichtung nach Anspruch 9 umfasst.

FIG.1

FIG.2